# EUROPEAN PATENT APPLICATION

(11) **EP 1 862 103 A1**
(43) Date of publication of application: **05.12.2007**
(21) Application number: 06114719.5
(22) Date of filing: 30.05.2006
(51) Int. Cl.: A47L 15/42, A47L 15/46

(54) **Dishwashing machine with a control system for reducing energy consumption**

(71) Applicant: Electrolux Home Products Corporation N.V., 1930 Zaventem (BE)
(72) Inventor: Alessandrelli, Roberto, 20158, Milano (IT); Brambilla, Enrico, 20127, Milano (IT)
(74) Representative: Giugni, Valter

(57) **Abstract**

Dishwashing machine comprising a washing vessel (2) holding the tableware items (3) to be washed, a collecting sump (4) provided at the bottom of the vessel (2) and adapted to be filled with water flowing in from the water supply line via a water inlet duct (5), an electromagnetic valve (6) adapted to control the inlet of water from the water supply line so as to enable a pre-established amount of water to be filled into the sump (4), a circulation pump (7) fluidly connected to the collecting sump (4) and to rotating spray arms (8, 9), heating means (12) for heating up the water; the heating means are adapted to pre-heat said pre-established amount of water up to a pre-set temperature value in static conditions, i.e. when the circulation pump (7) is not operated so that the water is not circulated inside the collecting sump (4), and further to heat water in dynamic conditions, i.e. when the circulation pump (7) is operated so that the water is circulated between the collecting sump (4) and the rotating spray arms (8, 9) in view of having the tableware items (3) washed.

## Description

The present invention refers to dishwashing machines in general, and in particular to a dishwashing machine of the kind intended for household use provided with means adapted to carry out a water pre-heating phase.

It is generally known that, for a dishwashing machine to be capable of effectively washing dishes, i.e. to be able to ensure a satisfactory cleaning result, the washing water used in the machine has to be heated up to a pre-set temperature range, typically by means of one or several electric heating elements. It is also a largely known fact that water heating accounts for a considerable amount of the total time required to complete a dishwashing cycle.

The water in a dishwashing machine can be heated up at the beginning of the washing cycle, and keeps then being heated on throughout the same cycle so as to maintain the water at the required temperature value.

However, it is this initial heating step that most of all affects the overall duration of the dishwashing cycle and causes it to last longer than a user might whish, actually, especially in those case in which he/she might happen to like to have the dishes cleaned sooner in view of being able to use them again and/or in view of being able to wash an additional load of dishes.

Disclosed in EP 1 004 266 is a dishwashing machine that includes a washing pump, which is connected to the upper rotating spray arm via a first duct, while it is connected to the lower rotating spray arm via a second duct. The water reaches this pump via a third duct coming from the collecting chamber, i.e. the sump, formed at the bottom of the washing vessel of the machine, wherein a first heating element is wound spirally around this third water-supply duct.

The above-mentioned dishwashing machine comprises a first valve arranged so as to be adapted to close the first duct, and a second valve arranged so as to be adapted to close the second duct; it further comprises a recirculation duct branching off the second duct - at a point located upstream of the second valve - to reach into the collecting chamber.

When the user sets the machine for water-preheating, water is filled thereinto up to a pre-established amount, while the valves in the ducts delivering water to the upper and lower rotating spray arms are shut to prevent water from being supplied thereto. The pump is in turn switched on along with the heating element, whereby the water is heated up by being circulated in the lower portion of the dishwashing machine, between the pump and the collecting chamber, via the recirculation duct and the third duct.

However, even this solution seems to have a number of practical drawbacks.

In the first place, the recirculation circuit may in fact be regarded as the cause of heat losses from the water, since the recirculation duct and the pump provide a considerable heat-exchange surface, through which the water is able to give off heat outside by convection. In other words, such circulation of the water goes to the detriment of the overall heating efficiency of the machine, thereby determining a higher energy usage and a longer time required to heat up the water to the desired temperature value.

In addition, for such a pre-heating step to be carried out, the need arises for water to be let into the machine to such an amount as to fill not only the collecting chamber, but rather the entire recirculation circuit, including the pump. This of course places limitations on the actual amount of water that can be saved in the use of the dishwashing machine described in EP 1 004 266.

Another drawback of the above-cited prior art lies in the fact that the pump has to operate continuously throughout the pre-heating step, with the result that to the energy usage due to the electric heating element there must be added also the energy usage brought about by the pump itself being concurrently switched on and operating during such pre-heating.

It is therefore an object of the present invention to provide a dishwashing machine, which is effective in doing away with the above-cited drawbacks of prior-art machines.

In particular, it is a purpose of the present invention to provide a dishwashing machine that is capable of carrying out a pre-heating step in a short time and with a better efficiency.

Another purpose of the present invention is to provide a dishwashing machine that is capable of carrying out a water pre-heating step using smaller amounts of both energy and water.

According to the present invention, these aims, along with further ones that will become apparent from the following disclosure, are reached in a dishwashing machine provided with an arrangement incorporating the features as defined and recited in the claims 1 to 4 appended hereto.

According to the present invention, the above-mentioned aims are also reached in a dishwashing cycle as defined and recited in the appended claims 5 to 9.

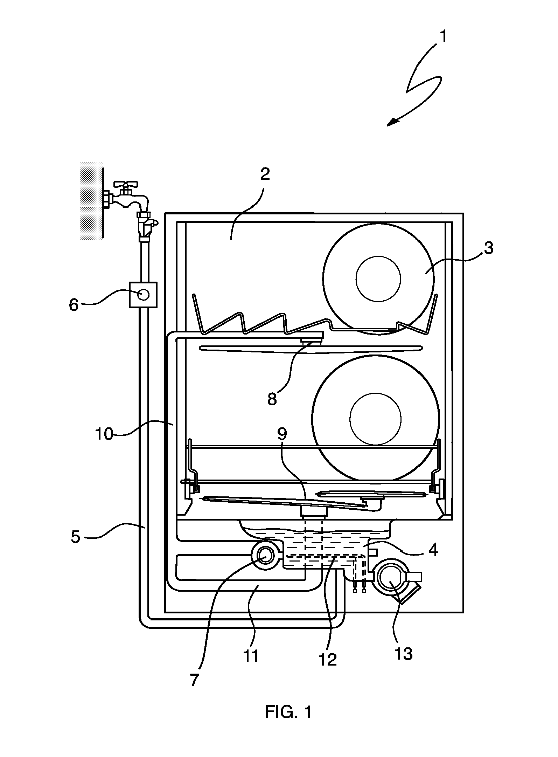

Features and advantages of the present invention will anyway be more readily understood from the description that is given below by way of nonlimiting example with reference to the accompanying drawings, in which
- Figure 1 is a front cross-sectional view of a dishwashing machine according to the present invention;

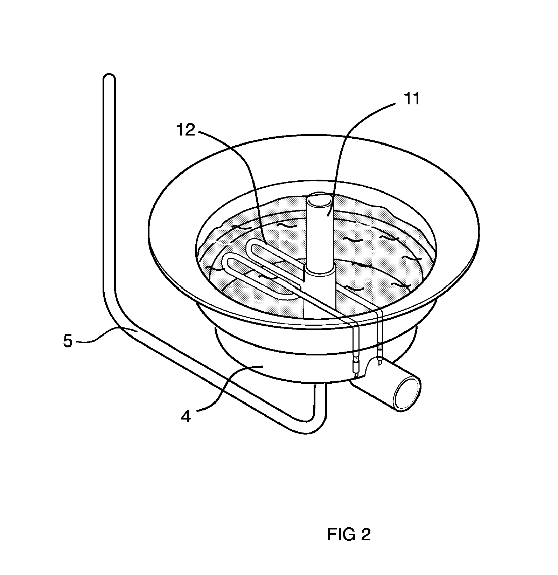

- Figure 2 is a perspective view of the collecting sump, of the dishwashing machine according to the present invention.

With reference to the above-cited Figures, the dishwashing machine according to the present invention - as generally indicated at 1 in said Figures - comprises a washing vessel 2 adapted to accommodate the tableware 3 to be washed, a collecting sump 4 formed on the bottom of the washing vessel 2 and adapted to receive water being let into it from the water supply line via a water-supply duct 5, an electromagnetic valve 6 adapted to control the inlet of water from the water supply line so as to enable a pre-established amount of water to be filled into the sump 4, a circulation pump 7 fluidly connected to both a top and a bottom rotating spray arm 8, 9 via respective water delivery ducts 10, 11, heating means 12 for heating up the water, and a drain pump 13.

The heating means 12 are adapted to pre-heat said pre-established amount of water up to a pre-set temperature value in static conditions, i.e. when the circulation pump 7 is not operated so that the water is not circulated inside the collecting sump 4, and further to heat water in dynamic conditions, i.e. when the circulation pump 7 is operated so that the water is circulated between the collecting sump 4 and the rotating spray arms 8, 9 in view of having said tableware items 3 washed.

Preferably the heating means 12 are arranged on the bottom of the collecting sump 4.

Further, preferably, the heating means 12 comprise at least an electric heating element for submerged operation of the kind used in water boilers, which is arranged on the bottom of the collecting sump 4 and is adapted to pre-heat water collected in said sump 4.

Via the water-supply duct 5, which is directly connected to the collecting sump 4, and by having the electromagnetic valve 6 properly actuated, a pre-established amount of water is allowed to flow in from the water supply line so as to fill the collecting sump 4.

As soon as the collecting sump 4 is filled with said pre-established amount of inflowing water, the immersion-type electric heating element is energized to pre-heat said amount of water up to a pre-set temperature value.

Throughout the time during which the immersion-type electric heating element in the sump 4 is energized to heat up the water to the pre-set temperature, the pumps 7,13 are not operated, so that the water is not circulated inside the sump, where - excepting the natural convective movement that may be induced by the temperature gradients generating in proximity of the immersion heater - it rather dwells under practically static conditions.

This static condition of the water filling the sump 4 is effective in reducing heat dissipation from the water during pre-heating and, as a result, in both boosting water heating efficiency and cutting the time needed for the water to be heated up to the desired temperature.

In addition, owing to the water remaining in a substantially still condition during pre-heating in the sump 4, the evaporation, i.e. release of steam molecules from the free surface of the water is favoured. By so ascending from the sump 4, the hot steam heats up the vessel 2, the rotating spray arms 8, 9, and therefore also the delivery ducts 10, 11, further of course to the tableware items 3 placed in the vessel 2 for washing. The hot steam carries out a sanitizing and cleaning action on the tableware items 3.

Then, when the water in the sump 4 eventually reaches its pre-set temperature value, the immersion-type electric heating element is switched off and the circulation pump 7 is at the same time energized so as to enable it to supply the top and bottom rotating spray arms 8, 9 via the delivery ducts 10, 11, whereupon a washing cycle is carried out in a manner as generally known as such in the art.

Owing to the vessel 2, the rotating spray arms 8, 9 and the delivery ducts 10, 11 having been preliminarily heated up by the steam from the sump during the water pre-heating step, heat dissipation from the water flowing between the sump 4 and the rotating spray arms 8, 9 is at this point drastically reduced, so that any additional energizing time periods of the heating means 12, during the washing cycle for constantly keeping the washing water at a pre-set temperature or for increasing the temperature of the washing water, are considerably shortened. As a consequence the energy usage is reduced.

In other words, for carrying out the washing cycle the water can be solely heated by the immersion-type electric heating element in the sump 4 during the pre-heat step, while said immersion heating element remains on the contrary switched off throughout the subsequent washing cycle and the water itself undergoes no further or additional heating by any other heating means.

Since heating up water under static conditions to a pre-set temperature value, for example situated between 55°C and 65°C, can certainly be done with a smaller energy usage as compared with a conventional heating process under dynamic conditions, a pre-heat step according to the present invention makes it advantageous - from an energy usage point of view - for the water to be heated up to a temperature of 80°C to 85°C, actually, before switching off the immersion-type electric heating element and energizing the circulation pump 7 to start the washing cycle, as described hereinbefore, in view of achieving an improved washing effect.

According to the present invention the dishwashing machine is adapted to carry out a washing cycle which comprises a water pre-heating phase wherein after a pre-established amount of water is filled into the collecting sump 3 so as to submerge said heating means 12, the heating means 12 are energized for pre-heating said pre-established amount of water up to a pre-set temperature value; while the circulation pump 7 is de-energized so that the water is not circulated inside the collecting sump 4.

As soon as the pre-established amount of water reaches its pre-set temperature value, the heating means 12 are switched off and the circulation pump 7 is at the same time energized for circulating the thus pre-heated water between the collecting sump 4 and the rotating spray arms 8, 9 in view of having said tableware items 3 washed. The heating means 12 remains switched off throughout the washing of such tableware items 3.

In a further alternative embodiment of the present invention, the circulation pump 7 is operated for circulating the thus pre-heated water between the collecting sump 4 and the rotating spray arms 8, 9 in view of having said tableware items 3 washed, while said heating means 12 are kept in a energized condition so as to constantly heat said water at the desired temperature.

In a further alternative embodiment of the present invention, after the pre-established amount of water reaches its pre-set temperature, the heating means 12 are switched off, and - at the same time - the circulation pump 7 is energized for circulating the thus pre-heated water between the collecting sump 4 and the rotating spray arms 8, 9 in view of having said tableware items 3 washed. The heating means 12 are energized for at least a pre-set period of time during the washing of the tableware items 3.

The further alternative embodiments, described above, imply the possibility for the water to be heated up to a lower temperature value during the pre-heat step, thereby cutting the pre-heating time needed.

Moreover, since the interior of the vessel 2, the rotating spray arms 8, 9 and the delivery ducts 10, 11 are already heated up by the steam generated as the water is pre-heated in the sump 4, thereby contributing to a reduced heat dissipation from the water circulated therethrough, the heating means 12 are only used, during the washing of the tableware items 3, for limited periods of time under a reduced energy usage.

In a further embodiment of the present invention, the dishwashing machine may comprise blower means adapted to blow onto the free surface of the water being pre-heated in the sump 4, so as to favour water vapour formation and the diffusion thereof inside the vessel 2.

This steam, in fact, would not only be effective in advantageously heating up the various component parts arranged inside the washing vessel, as this has already been discussed above, but also in bringing about a certain sanitizing action inside said vessel 2 altogether.

The pre-heating of the water in the sump under static conditions drastically reduces the heat-exchange surface through which the water is able to give off heat outside by convection.
In other words, the static conditions of the water in the sump reduce the heat losses and improve the overall heating efficiency of the machine, thereby determining a lower energy usage and a shorter time required to heat up the water to the desired temperature value.

Fully apparent from the above description is therefore the ability of the the present invention to effectively reach the afore-cited aims and advantages by providing a dishwashing machine with a particularly efficient water pre-heating step enabling energy usage and heating time to be reduced to a significant extent.

Furthermore, the dishwashing machine according to the present invention enables a water pre-heating step to be carried out, in which the circulation pump is de-energized, thereby ensuring - further to an additional energy saving effect - also a shorter time of use of the same pump with the added benefit of much less noise being generated and emitted during water heating.

## Claims

1. Dishwashing machine comprising a washing vessel (2) holding the tableware items (3) to be washed, a collecting sump (4) provided at the bottom of the vessel (2) and adapted to be filled with water flowing in from the water supply line via a water inlet duct (5), an electromagnetic valve (6) adapted to control the inlet of water from the water supply line so as to enable a pre-established amount of water to be filled into the sump (4), a circulation pump (7) fluidly connected to said collecting sump (4) and to rotating spray arms (8, 9), heating means (12) for heating up the water, **characterized in that** said heating means are adapted to pre-heat said pre-established amount of water up to a pre-set temperature value in static conditions, i.e. when the circulation pump (7) is not operated so that the water is not circulated inside the collecting sump (4), and further to heat water in dynamic conditions, i.e. when the circulation pump (7) is operated so that the water is circulated between the collecting sump (4) and the rotating spray arms (8, 9) in view of having said tableware items (3) washed.

2. Dishwashing machine according to claim 1, wherein said heating means (12) are arranged in the collecting sump (4)

3. Dishwashing machine according to claim 1 or 2, wherein said heating means (12) comprise at least an immersion heating element.

4. Dishwashing machine according to any of the preceding claims, wherein it comprise blower means adapted to blow onto the free surface of the water being pre-heated in the sump (4), so as to favour water vapour formation and the diffusion thereof inside the vessel (2).

5. Washing cycle for a dishwashing machine comprising a washing vessel (2) holding the tableware items (3) to be washed, a collecting sump
(4) provided at the bottom of the vessel (2) and adapted to be filled with water flowing in from the water supply line via a water inlet duct (5), an electromagnetic valve (6) adapted to control the inlet of water from the water supply line so as to enable a pre-established amount of water to be filled into the sump (4), a circulation pump (7) fluidly connected to said collecting sump (4) and to rotating spray arms (8, 9), heating means (12) for heating up the water, **characterized in that** it includes the steps of:
- filling a pre-established amount of water into the collecting sump (3) so as to submerge said heating means (12);
- energizing said heating means (12) for pre-heating said pre-established amount of water up to a pre-set temperature value; while the circulation pump (7) is de-energized so that the water is not circulated inside the collecting sump (4).

6. Washing cycle according to claim 5, wherein it further comprises the step of:
- de-energizing said heating means (12);
- operating the circulation pump (7) for circulating the thus pre-heated water between the collecting sump (4) and the rotating spray arms (8, 9) in view of having said tableware items (3) washed, while said heating means (12) are kept in a de-energized condition.

7. Washing cycle according to claim 5, wherein it further comprises the step of:
- operating the circulation pump (7) for circulating the thus pre-heated water between the collecting sump (4) and the rotating spray arms (8, 9) in view of having said tableware items (3) washed, while said heating means (12) are kept in a energized condition so as to constantly heat said water.

8. Washing cycle according to claim 5, wherein it further comprises the step of:
- de-energizing said heating means (12);
- operating the circulation pump (7) for circulating the thus pre-heated water between the collecting sump (4) and the rotating spray arms (8, 9) in view of having said tableware items (3) washed;
- energizing said heating means (12) for at least a pre-set period of time during the washing the tableware items (3)

9. Washing cycle according to any of the preceding claims, wherein it further comprise the step of:
- having air blown onto the free surface of the water being pre-heated in the sump (4), so as to favour water vapour formation and the diffusion thereof inside the vessel (2).
